(19)

Europäisches Patentamt

European Patent Office

Office européen des brevets

(11) **EP 2 169 250 B1**

(12) **EUROPÄISCHE PATENTSCHRIFT**

(45) Veröffentlichungstag und Bekanntmachung des Hinweises auf die Patenterteilung:
**07.11.2012 Patentblatt 2012/45**

(51) Int Cl.:
***F16D 23/06*** *(2006.01)*        ***F16H 61/688*** *(2006.01)*

(21) Anmeldenummer: **09171490.7**

(22) Anmeldetag: **28.09.2009**

(54) **Doppelkupplungsgetriebe**

Double clutch transmission

Engrenage à couplage double

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.09.2008 DE 102008049347**

(43) Veröffentlichungstag der Anmeldung:
**31.03.2010 Patentblatt 2010/13**

(73) Patentinhaber:
- **hofer forschungs- und entwicklungs GmbH
  4451 Garsten (AT)**
- **hofer-pdc GmbH
  70327 Stuttgart (DE)**

(72) Erfinder:
- **Dipl.-Ing. Hackl, Thomas
  4645, Sattledt (AT)**

- **Dr. techn. Berger, Martin
  70327, Stuttgart (DE)**
- **Dr.-Ing. Kalmbach, Klaus
  72116, Mössingen (DE)**
- **Ing. Hofer, Markus
  4451, Garsten (AT)**
- **Hofer, Johann Paul
  39057, Girlan (IT)**

(74) Vertreter: **Cremer, Christian
Cremer & Cremer
Patentanwälte
St.-Barbara-Straße 16
89077 Ulm (DE)**

(56) Entgegenhaltungen:
**EP-A- 1 750 025          EP-A- 1 826 431
DE-A1-102007 022 544    DE-B3-102006 044 352
US-A1- 2002 060 113      US-A1- 2002 069 716
US-E1- R E37 697**

## Beschreibung

Die vorliegende Erfindung betrifft ein Doppelkupplungsgetriebe, insbesondere ein hydraulisch oder elektromechanisch gesteuertes Doppelkupplungsgetriebe, sowie ein Verfahren zum Betrieb eines Doppelkupplungsgetriebes.

## Stand der Technik

Doppelkupplungen sind seit ihrer Einführung in dem automobilen Massenmarkt durch Fahrzeugtypen aus dem Hause Volkswagen AG seit ca. dem Jahr 2003 weithin einem breiten Publikum bekannt. Die Fahrzeuge mit Doppelkupplungen gelten als Fahrzeuge mit besonders hohem Fahrkomfort auf Grund ihres unterbrechungsfreien Antriebs, selbst bei Schaltvorgängen. Der Fahrer nimmt vorrangig den eigentlichen Schaltvorgang wahr und misst daran den Komfort des Doppelkupplungsgetriebes und somit des Fahrzeugs. Die Schaltwechsel werden sehr stark durch die Synchronisierung beeinflusst.

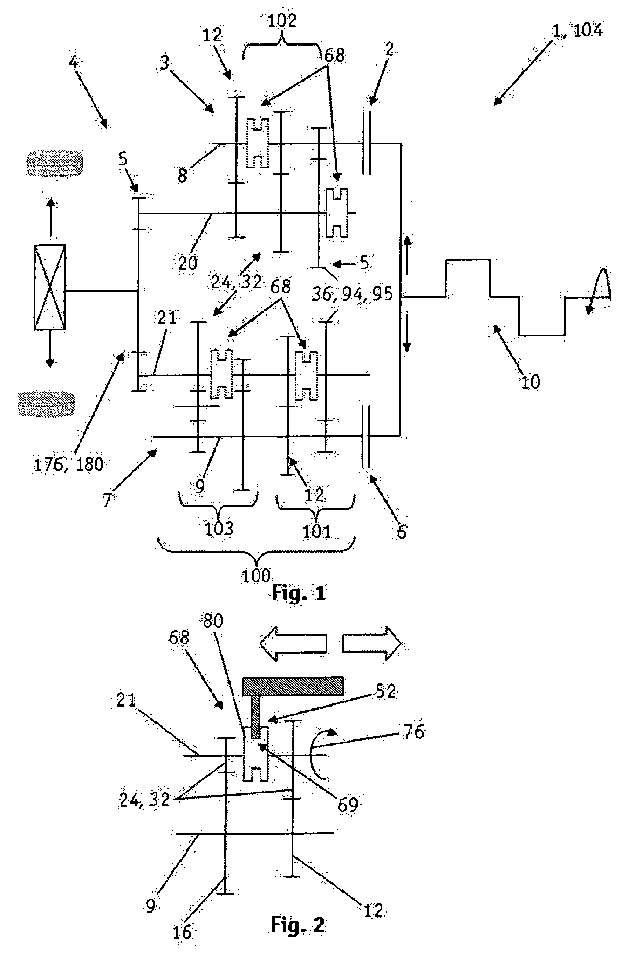

Die DE 101 48 424 A1 (Anmelderin: ZF Sachs AG; Prioritätstag: 12.01.2001) beschreibt ein Beispiel für eine herkömmliche Einkonus-Synchroniserung nach dem System "Borg-Warner" u. a. mit Reibkonus, Gegenkonus, Synchronkörper, einem Druckstück G und einer Schaltmuffe. Eine eingehende Offenbarung zur Ausführung des Druckstücks findet sich im Text der Beschreibung nicht. Wie aus den Absätzen [0029] und [0032] der Beschreibung zu entnehmen ist, muss eine entsprechende Steuerungshydraulik nach den Figuren 2 und 7 teilweise Kräfte von mehr als 2000 N zum Schalten aufbringen können, die deutlich über die Dauerbelastungsgrenzen der Synchronisierung gehen. Daher wird dort vorgeschlagen, die Synchronisierungen der unterschiedlichen Gänge gleichzeitig parallel zu nutzen. Wie üblich lässt sich das Steuerdruckniveau nur über einen Gaspolster aufweisenden Druckölspeicher überhaupt erzeugen.

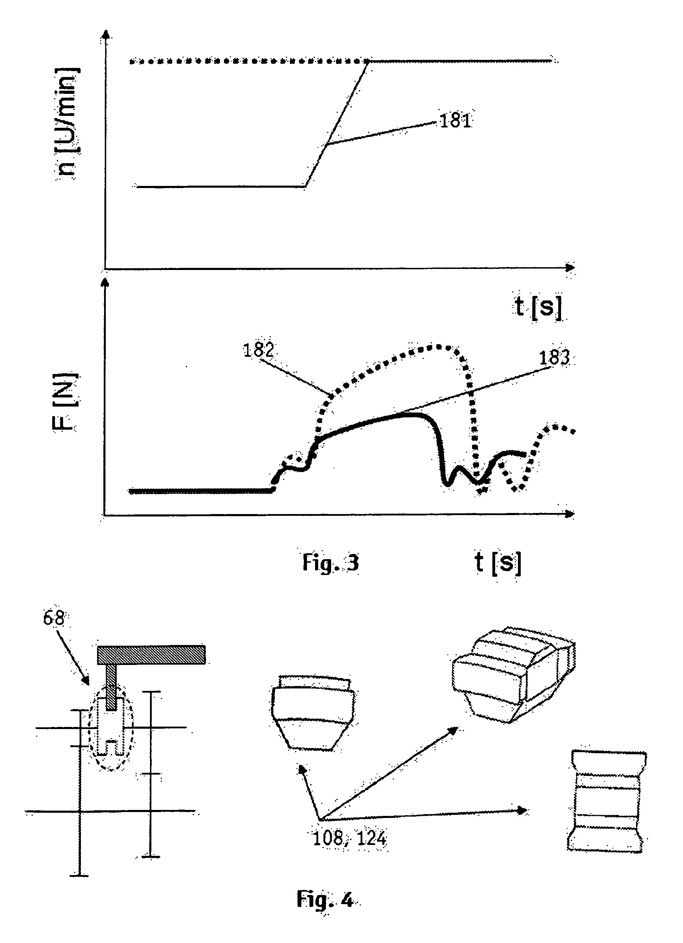

Die DE 41 04 167 A1 (Anmelder: Michael Meyerle; Prioritätstag: 13.02.1990) offenbart eine Schalteinrichtung für automatisch schaltbare Kraftfahrzeuggetriebe, insbesondere für hydrostatisch-mechanische Getriebe mit Leistungsverzweigung zum Schalten mehrerer Schaltbereiche. Die Druckschrift ist ein Beispiel dafür, dass der Stand der Technik der spezifischen Ausformung von Druckstücken wenig Augenmerk zu schenken scheint, denn die Fachwelt ordnet dem Druckstück nur eine nachgeordnete Bedeutung in technischfunktioneller Hinsicht zu. Das Wort Druckstück kommt zwar in der Bezugszeichenliste der DE 41 04 167 A1 vor, jedoch kommt im Text der Beschreibung weder das Wort Druckstück noch das diesem lt. Bezugszeichenliste zugeordnete Bezugszeichen 42 vor. In den Figuren Fig. 3b und Fig. 4 ist im Zusammenhang mit speziellen Kupplungsausführungen jeweils das Bezugszeichen 42 zu sehen. Es ist jedoch im Text der Beschreibung darauf mit keinem Wort Bezug genommen worden.

Immerhin explizit, jedoch eher generell, nimmt die DE 10 2006 020 905 B3 (Patentinhaberin: DaimlerChrysler AG; Anmeldetag: 05.05.2006) auf Druckstücke Bezug. Es wird beschrieben, wie ein Zahnrad, insbesondere Losrad, mit einem einseitig synchronisierenden und schaltenden Schaltelement zusammenwirkt. Gem. Absatz [0012] wird das Druckstück verwendet, um eine drehfeste Verbindung zwischen dem Festrad und dem Losrad herzustellen bzw. wieder davon zu lösen. Nachteiligerweise kann der Fachmann den Ausführungen lediglich eine Ausnehmung 26 zur Aufnahme des Druckstücks explizit entnehmen, während - wie zuvor schon ausgeführt üblicher Weise - die Ausgestaltung des Druckstücks weder in den Zeichnungen gezeigt noch in der Beschreibung näher dargelegt ist. Die stoffschlüssige Verbindung zweier Räder einer Synchronisierung wird in der Beschreibung der Druckschrift erörtert. Sie lehrt eine vorteilhafte Herstellungsart von Getriebesynchronisationen, die nach dem Konusprinzip arbeiten.

Die DE 10 2005 056 827 A1 (Anmelderin: Getrag Synchrontechnik GmbH; Anmeldetag: 22.11.2005) beschreibt für eine Synchronkupplung einen Synchronring mit wenigstens einem Federelement, das dazu ausgebildet ist, eine axiale Vorsynchronkraft zu übertragen (Figur 1). Auch in dieser Druckschrift ist die Ausbildung des Druckstücks nicht näher offenbart, weil angenommen unbedeutend. Fig. 12 zeigt immerhin einen Ausschnitt aus der Verzahnung der Schaltmuffe. In den Fig. 11 und Fig. 12 ist gezeigt, dass drei Zähne 102 jeweils den drei Federelementen (= Druckstücke) 26 des zugeordneten Synchronrings 24 zugewiesen sind (s. Absatz [0120]). Die Schiebemuffenrastierung in der Neutralposition ist die Aufgabe der Federelemente.

Die DE 202 16 782 U1 (Anmelder: Jörg Schwarzbich; Anmeldetag: 31.10.2002) beschreibt unterschiedliche Federsysteme (Druckstücke) in Handschaltgetrieben. Die beschriebenen Federsysteme (Druckstücke) sind in der DE 202 16 782 U1 jeweils in ein Kupplungspaket integriert dargestellt, das zwei Synchronkupplungen aufweist. Je nach Verschieberichtung der Schiebemuffe muss die Schiebemuffe zunächst die Rasterhebung des Druckstücks kraftmäßig überwinden.

Die DE 195 80 558 C1 (Patentinhaberin: INA Wälzlager Schaeffler KG; Prioritätstag: 01.06.1994) beschreibt eine Synchronisiereinrichtung für Schaltgetriebe mit einem Synchronkörper. In die Außenverzahnung und in die Längsnuten des Synchronkörpers und eine Innenverzahnung einer Schiebemuffe greifen Druckstücke ein. Jedes der Druckstücke weist als komplette Baueinheiten ein hülsenartiges, die Druckfeder und das Rastelement aufnehmendes Fußteil sowie ein mit diesem verbundenes, hohles, quaderförmiges Kopfteil auf, wobei das Fußteil an seinem einen Ende einen Boden aufweist, während am gegenüberliegenden Ende ein Endanschlag für das federbelastete Rastelement vorgesehen ist.

Die DE 40 41 159 A1 (Anmelderin: Mercedes-Benz AG; Anmeldetag: 21.12.1990) beschreibt eine druckmittelbetätigte Reibungskupplung mit axial bewegbaren Reibscheiben, zu denen vorgelagert der hydraulische Arbeitszylinder angeordnet ist. Die Reibungskupplung ist durch wenigstens eine Einrückfeder sowie durch ein Einrückstellglied einrückbar, sowie durch ein Ausrückstellglied ausrückbar. Im stationären eingerückten Zustand ist nur die Federkraft wirksam. Es sind ringförmige und bolzenförmige Drückstücke 18, 27 erwähnt.

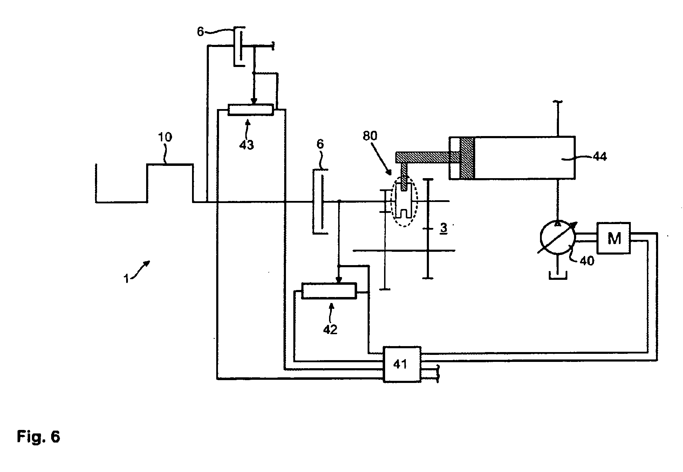

Die DE 103 12 867 B3 (Patentinhaberin: Getrag Getriebe- und Zahnradfabrik Hermann Hagenmeyer GmbH & Cie. KG) beschreibt eine Schaltkupplung für ein automatisiertes Stufengetriebe, mit dem sich Gangwechsel zumindest unter Teillast durchführen lassen, wobei die Schaltkupplung generell als Sperr-Synchronisierung mit einer Schaltmuffe, einem Kupplungskörper, einem Synchronring und einer Reibkupplung beschrieben ist. Ein Gang kann zumindest unter Teillast eingelegt werden. Dabei ist eine Anspitzung wenigstens einiger Zähne der Schaltmuffenverzahnung in wenigstens zwei axiale Bereiche unterteilt, die unterschiedliche Anspitzwinkel aufweisen, die jeweils größer als Null sind. Die in einer üblichen Synchronisation herrschenden Drehmomente sind den Figuren 6 und 7 zu entnehmen. Die Drehmomente sind knapp vor dem Einspuren mit mehr als 300 Nm angegeben.

Die DE 10 2006 050 752 A1 (Anmelderin: Volkswagen AG; Anmeldetag: 27.10.2006) beschreibt eine Steuerungsanordnung zur Steuerung der Schaltungen eines automatischen Schaltgetriebes eines Kraftfahrzeuges, insbesondere eines Doppelkupplungsgetriebes. In Absatz [0003] ist unter Hinweis auf einen nicht näher spezifizierten Stand der Technik aufgeführt, dass mit der bekannten Steuerungsanordnung, insbesondere durch die realisierte Druckregelung das Synchronisationsmoment während eines Schaltvorganges, d. h. des Wechsels einer Gangstufe, die Gangwahl gut beeinflusst werden könne, allerdings könne die Geschwindigkeit der einzelnen Gangsteller, die die jeweiligen Schiebemuffen ein- bzw. ausrücken, nur sehr eingeschränkt beeinflusst werden.

Die WO 2005 080 831 A1 (Anmelderin: Toyota Jidosha Kabushiki Kaisha; Prioritätstag: 30.01.2004), siehe auch die DE 60 2005 000 224 T2, beschreibt eine Gangschaltvorrichtung mit einem normal kämmenden Getriebe und einer Kupplung. Es ist u. a. ein Synchronisationsmechanismus, der mechanisch während des Schaltens eine Drehzahl der Eingangswelle mit einer Drehzahl der Ausgangswelle synchronisiert, umfasst. Zwei Rechner berechnen Synchronisationsdauern zur Synchronisation mittels des Synchronisationsmechanismus. In Absatz [0041] ff. ist unter Bezugnahme auf die Fig. 3A and 3B ein "Synchromesh"-Mechanismus u. a. mit einem "synchronizer key 474", einem "synchronizer ring 480" und einem schiefen (tapered) Kegelabschnitt (cone portion 484) beschrieben. Aus der Anmeldung ist ersichtlich, welcher Steuerungsaufwand zu treiben ist, damit insbesondere bei Doppelkupplungen das Synchronisieren zuverlässig nicht zu einer Doppelgangeinlegung im Fahrbetrieb führt.

Die DE 197 02 541 C1 (Patentinhaberin: Volkswagen AG; Priorität: 01.02.1996) beschreibt zur Verwendung bei elektronisch synchronisierten Getrieben ein zweiteiliges Gangrad. Es wird unter anderem vorgeschlagen, die Synchronisierung zentral anzuordnen. Der Einsatz eines in der Druckschrift vorgeschlagenen Gangrades ermöglicht eine schnellere Synchronisation und schnelleren Formschluss und damit frühere Momentenübertragung durch eine gewählte Gangstufe. Schaltverzahnungsverschleiß soll vermieden werden. Laut letztern Satz der Beschreibung muss bei Lastwechselschlägen die Schiebemuffe durch eine Servo-Betätigungseinrichtung in der Schaltposition gehalten werden, um ein unbeabsichtigtes Herausgleiten und damit eine Momentenunterbrechung zu vermeiden. Die so genannte Dachkraft lässt sich durch diese dort offenbarte, aber kaum wie dargestellt massentauglich so fertigbare Synchronisierung zwischen den Zahnflanken reduzieren. Die eigentliche Synchronisierkraft muss aber weiterhin aufgewendet werden.

Die DE 103 50 937 A1 (Patentanrneiderin: LUK Lamellen- und Kupplungsschaltungsbau Beteiligungs KG; Prioritätstag: 02.11.2002) schlägt eine vereinfachte Synchronisationseinrichtung vor, welche bei automatisierten Handschaltgetrieben u.a. mit Doppelkupplungen, wie z. B. einem Parallelschaltgetriebe (PSG), eingesetzt werden kann. Die Einrichtung benötigt eine geringere Betätigungskraft verglichen mit herkömmlichen Einrichtungen, die sonst über 1000 N liegen sollen. Eine in der Druckschrift beschriebene Einrichtung ermöglicht dem Bediener oder auch der Software zwischen synchronisierten oder nicht synchronisierten Schaltvorgängen zu wählen. Hierzu ist eine besondere Steuerungssoftware gem. der dort vorgeschlagenen Lösung nötig. Die Erfindung ist nach eigenen Aussagen nicht auf Schaltgetriebe zu übertragen.

Die DE 1 208 966 A (Anmelderin: Régie Nationale des Usines Renault; Prioritätstag: 14.01.9160) beschreibt eine insbesondere für Zahnräderwechselgetriebe bestimmte Zahnkupplung mit einem Synchronisier- und Sperring. In Spalte 1 im vorletzten Absatz ist von einer Servowirkung die Rede: Wollte man den Reibring an dem zu kuppelnden Zahnkranz anordnen und die verschiebliche Schaltmuffe mit einer Reibfläche ausrüsten - von der letztgenannten Bauform geht die DE 1 208 966 A aus -, dann müsste bei Anwendung von Keilflächen zur Erzeugung einer Servowirkung der Axialschub am Schaltgestänge abgestützt werden, d. h., die Schaltkraft müsste entsprechend groß sein. Die Lehre der DE 1 208 966 A weist den Fachmann auch auf die Möglichkeit hin, den Axialschub bei dieser Bauform am Muffenträger abzustützen, jedoch unter dem Hinweis, dass sich dann eine einmal eingeleitete Schaltung nicht mehr rückgängig machen ließe, d. h., der Schaltvorgang könnte während des Synchronisierens nicht mehr unterbrochen werden.

Aus der DE 10 2006 044 352 B3 (Patentinhaberin: hofer pdc GmbH; Anmeldetag: 18.09.2006) ist ein Synchronisationsdruckstück bekannt, das als Teil einer Servosynchronisation mit einer Schiebemuffe, einem Kupplungskörper, einem Synchronring und einem Losrad ein Getriebe mit Zahnradübersetzungen für ein Handschaltgetriebe synchronisieren kann. Weiterhin beschreibt die DE 10 2006 044 352 B3 eine gesamte Synchronisierung mit dem dort beschriebenen Synchronisationsstück, das in einem Handschaltgetriebe eingesetzt werden kann. Daneben wird eine Vollservosynchronisation vorgestellt.

Aus Gründen der Förderung der Lesbarkeit wird die zuvor angeführte Druckschrift DE 10 2006 044 352 B3 vollinhaltlich in der vorliegenden Beschreibung durch ihre Referenz inkorporiert. Sämtliche Ausführungen zu den in der DE 10 2006 044 352 B3 beschriebenen Ausgestaltungen eines Servosynchronisationsdruckstücks gelten mit ihrer Referenzierung auch in vorliegender Beschreibung als offenbart.

Ein weiteres Doppelkupplungsgetriebe kann der US 5 390 560 A (Patentinhaberin: General Motors Corporation; Anmeldetag: 09.02.1993) entnommen werden, das mit sechs Vorwärtsgängen und zwei Rückwärtsgängen in einem Gehäuse realisiert ist, in dessen Mitte ein weiteres Schott zur Unterstützung der Wellen wie Vorgelegewellen anzuordnen ist. Mittels klassischer Synchronisationsvorrichtungen kann eine Gangwahl zwischen den acht Gängen durchgeführt werden. Die Steuerung soll vorzugsweise hydraulisch erfolgen. Ein Druckstück, das den Druckstückausführungen nach DE 10 2006 044 352 B3 dem Prinzip nach sehr ähnelt, ist in der DE 10 2007 022 544 B4 (Patentinhaberin: HOERBIGER Synchron Technik GmbH & Co. KG.; Anmeldetag: 09.05.2007) beschrieben. In allgemeinen Worten wird dort vorgeschlagen, das in der Druckschrift beschriebene Druckstück in allen möglichen Arten von Getrieben einsetzen zu wollen.

Die durch ihre Referenzen zuvor dargelegten unterschiedlichen Ausführungsformen von Doppelkupplungsgetrieben werden vollumfänglich in Bezug auf die Doppelkupplungsgestaltungen und Getriebebeschreibungen in die vorliegende Erfindungsoffenbarung inkorporiert. In der Absicht, dass die Erfindungsbeschreibung sich nicht mit den Darlegungen der unterschiedlichen Doppelkupplungsgetrieben aufhält, werden die Doppelkupplungsgetriebe aus den Referenzen als mögliche Ausführungsformen mit einer erfindungsgemäßen Lösung nachfolgend offenbart. Die vorliegende Erfindung lässt sich mit den meisten der hierin beschriebenen Doppelkupplungen vorteilhaft verbinden.

In der EP 1 826 431 A2 (Patentinhaberin: KYOWA METAL WORKS CO LTD; Anmeldetag: 26.02.2007) und in der EP 1 750 025 A2 (Patentinhaberin: KYOWA METAL WORKS CO LTD; Anmeldetag: 04.08.2006) und in der US RE 37 697 E1 (Patentinhaberin: Eaton Corporation; Anmeldetag: 16.10.2000) sind unterschiedliche Varianten von Schalteinrichtungen für Schaltgetriebe beschrieben. Allerdings kann diesen Druckschriften kein auf ein Doppelkupplungsgetriebe bezogener Offenbarungsinhalt entnommen werden.

Die US 2002 069 716 A1 (Patentanmelderin: LUK LAMELLEN & KUPPLUNGSBAU Beteiligungs KG; Anmeldetag: 12.10.2001) und die US 2002 060 113 A1 (Patentanmelderin: LUK LAMELLEN & KUPPLUNGSBAU Beteiligungs KG; Anmeldetag: 20.11.2001) befassen sich mit einem Verfahren bzw. mit einem hydraulischen Betätigungssystem mit einem hydraulischen Kupplungsstellglied zur Steuerung des Einrückens der aktiven Kupplung, einem Gangschaltungsstellglied zur Steuerung des Schalters in einen Gang, einem hydraulischen Speicher, einem Hydraulikflüssigkeitsreservoir, einem Hauptsteuerventil zum selektiven Verbinden des hydraulischen Kupplungsstellgliedes und des Gangschaltungsstellgliedes mit dem Speicher oder dem Reservoir und einem Trennventil zum Trennen des Gangschaltungsstellgliedes vom Hauptsteuerventil, wenn das Kupplungsstellglied mit dem Speicher verbunden ist, wobei das Kupplungsstellglied die Kupplung in Eingriff bringt, wenn es mit dem Speicher verbunden ist, und die Kupplung löst, wenn es mit dem Reservoir verbunden ist. Zwei derartige hydraulische Betätigungssysteme können parallel angeschlossen sein, um die Kupplungen eines Doppelkupplungsgetriebesystems zu steuern.

Trotz der hervorragenden Fahreigenschaft von Doppelkupplungsgetrieben stellt sich für Automobilhersteller immer wieder die Frage, ob sie den gewonnenen Fahrkomfort zu Lasten von Wirkungsgraden in Kauf nehmen sollen. Die aufzuwendenden Kräfte in Doppelkupplungsgetrieben sind entsprechend hoch, zum Beispiel mehr als 1000 N. Trotz der bekannten Drucködspeicher, die teilweise sogar vorzuspannen sind, wird häufig eine permanent mitlaufende Hydraulikpumpe für den Getriebehydraulikkreis betrieben, damit das Druckniveau der hydraulischen Steuerungseinrichtung der Doppelkupplung bei allen Gangwechselspielen zuverlässig aufrechterhalten werden kann. Analog gilt das Gleiche bei elektromechanischen Steuerungen.

Erfindungsbeschreibung

Doppelkupplungsgetriebe können dadurch attraktiver gemacht werden, dass der Energieverbrauch, der für die Steuerung der Doppelkupplungsgetriebe notwendig ist, gesenkt werden kann. Die Energie wird in Doppelkupplungsgetrieben durch eine hydraulische, eine elektromechanische oder eine pneumatische Ansteuerung aufgebracht.

Die erfindungsgemäße Aufgabe wird durch ein Doppelkupplungsgetriebe nach Hauptanspruch 1 oder 2 gelöst. Ein vorteilhaftes Verfahren zum Betrieb eines erfindungsgemäßen Doppelkupplungsgetriebes wird in Anspruch 14 dargelegt. Vorteilhafte Weiterbildungen lassen sich den abhängigen Ansprüchen entnehmen.

Die vorliegende Erfindung greift auf ein Synchronisationsdruckstück, kurz Druckstück, zurück, das sich für Servosynchronisationen in Doppelkupplungsgetrieben, insbesondere Vollservosynchronisationen, die entweder hydraulisch oder elektromechanisch betätigt werden, vorrangig in den unteren Gängen, optimal eignet.

Das Doppelkupplungsgetriebe umfasst wenigstens zwei Kupplungen. Weiterhin umfasst das Doppelkupplungsgetriebe wenigstens zwei Teilgetriebe. Das Doppelkupplungsgetriebe umfasst zwei Stimradsätze. Die Stimradsätze sind mit Synchronisierungen ausgestattet.

Das Doppelkupplungsgetriebe ist insbesondere in einem Kraftfahrzeugfahrzeugantriebsstrang angeordnet Ein Kraftfahrzeugfahrzeugantriebsstrang ist ein Fahrzeugantriebsstrang, der in einem Kraftfahrzeug nutzbar ist. Das Doppelkupplungsgetriebe ist mit einer ersten und einer zweiten Vorgelegewelle ausgestattet. Auf der ersten und zweiten Vorgelegewelle sind Zahnräder unterschiedlicher Durchmesser angeordnet. Weiterhin weist das Doppelkupplungsgetriebe wenigstens eine Abtriebswelle auf. Auf der Abtriebswelle sind Losräder angeordnet. Die Losräder sind den Zahnrädern der beiden Vorgelegewellen zugeordnet.

Weiterhin weist das Doppelkupplungsgetriebe eine gleiche Anzahl Gangräder, wie die Anzahl der Losräder ist, mit Außenzahnrädern auf, wobei je ein Gangrad einem Losrad zugeordnet ist.

Die einzelnen Muffen der Muffensynchronisationen haben ihre Zahnräder auf der Innenseite. Mehrere Muffensynchronisierungen mit innen liegenden Zähnen können durch Konussynchronisierungen eine Drehzahlanpassung während einer Gangeinlegephase zwischen einem gewählten Zahnrad der Vorgelegewelle und des zugehörigen Losrads der Abtriebswelle vornehmen.

Eine Doppelkupplung in einem Doppelkupplungsgetriebe ist bekanntlich eine lastschaltbare Kupplungseinheit. Die Kupplungseinheit besteht - genau genommen - aus zwei, meist konzentrisch angeordneten, Kupplungen. Jede Kupplungseinheit kann jeweils eine Verbindung zu einer Welle schalten. Bei solchen Kupplungsmodulen für Doppelkupplungsgetriebe verfügen beide Kupplungen über voneinander unabhängige Kupplungsbetätigungen. Die eine Kupplung bedient die ungeraden, die andere Kupplung die geraden Gänge. Der Rückwärtsgang oder die Rückwärtsgänge sind häufig auf einer der beiden Teilgetriebe, also einer Welle, angeordnet. Zum Beispiel liegt ein Rückwärtsgang auf der Welle, die auch den zweiten Gang aufweist. Der erste Satz Gänge befindet sich üblicherweise auf der als inneren Vollwelle ausgebildeten ersten Vorgelegewelle. Der zweite Satz Gänge befindet sich auf der zweiten Vorgelegewelle, welche üblicherweise als zur ersten Vorgelegewelle konzentrische Hohlwelle ausgeführt ist. Während über die eine Kupplung aktuell Drehmoment in den eingelegten Gang fließt, kann der nächste Gang bereits vorgewählt werden, um anschließend zugkraftunterbrechungsfrei das Drehmoment von einem Gang auf den nächsten hinüberfließen zu lassen. Einfachere Formen von Doppelkupplungen bzw. Doppelkupplungsgetrieben findet man z. B. in der Landmaschinentechnik, wo beispielsweise eine Kupplung als Anfahrelement des Fahrantriebs dient und die zweite zum Zuschalten des Antriebs einer Zapfwelle. Dadurch ist es möglich, Fahrantrieb- und Zapfwellenantrieb unabhängig voneinander zu nutzen.

Durch ein Anliegen eines Teils des Druckstücks und eines Teils der Nabe kann die Synchronisation eine laterale Kraftverstärkung erfahren. Die Reibkräfte beim Abbremsen der drehzahlungleichförmigen Umdrehungsgeschwindigkeit zwischen Losrad und Gangrad können so lateral übertragen verstärkt werden. In einer Ruheposition befindet sich das Druckstück in einer Stellung, in der keine seitliche Kraftübertragungsverstärkung stattfindet Nach einer Ausgestaltung hat das Druckstück seitlich in der Ruheposition in seinem Kraftverstärkungsabschnitt keine Anlage.

Erfindungsgemäß erfährt wenigstens eine Muffensynchronisierung eine Konussynchronisierungsverstärkung. Die Konussynchronisierungsverstärkung entsteht erfindungsgemäß dadurch, dass eine in Umlaufrichtung der ringartigen Muffe der Synchronisierung gesehene laterale Reibkraftverstärkung bei einer Synchronisationsverbringung einer Reibfläche eines Konus zu einer Synchronisationsbremsanlage erfolgt und ein Einspuren von Flanken der Zähne der Gangräder und der Muffen stattfindet, wobei die Pumpe das Druckniveau in der Getriebehydraulik während der gesamten Synchronisation ohne Nachlaufzeit in einem gleich bleibenden Druckband hält. Die Konussynchronisierungsverstärkung bewirkt vorteilhafterweise eine leichtgängige Schaltbarkeit des Doppelkupptungsgetriebes bei gleichzeitig beschleunigtem Schaltvorgang.

Eine Synchronisation wird als Servosynchronisation bezeichnet, wenn die Energie aus dem Drehmoment der zueinander verdrehbaren Zahnräder genutzt wird, um den Synchronisationsvorgang zu erleichtern. Vorteilhaft wäre bei einer Servosynchronisation auch die Reduktion der notwendigen Kraft für das Entsperren zwischen Schiebemuffe und Synchronring. In der Regel ist die Entsperrkraft auch bei Servosynchronisationen zum Teil höher als die durch den Schaltvorgang aufzuwendende Synchronkraft. Die über den Schalthebel des Schaltgestänges auf die Synchronisation aufgebrachte Schaltkraft wird bei einer Servosynchronisation verstärkt

Das Doppelkupplungsgetriebe muss in Bezug auf die in ihm verwendeten Druckstücke nicht in allen Gängen identisch aufgebaut sein. Ein Doppelkupplungsgetriebe gilt als anspruchsgemäß, wenn (nur) in einigen Gängen Servosynchronisationsdruckstücke eingebaut sind.

Das erfindungsgemäße Doppelkupplungsgetriebe kann durch ein vorteilhaftes Verfahren betrieben werden. Zum Betrieb des Doppelkupplungsgetriebes weist dieses ein Steuergerät, entsprechende Sensorik zur Wegbeobachtung, insbesondere der axialen Wegbeobachtung innerhalb des Getriebes bzw. zumindest einer der Kupplungen, und wenigstens eine Pumpe auf.

Während der Synchronisation wäre insbesondere in den niedrigen Gängen eine zusätzlich aufzubringende axiale Anpresskraft nötig. Die Kraft wird als axiale Anpresskraft bezeichnet, die die Reibfläche des Konus zur Bremsanlage in der Synchronisation bringt. Die Anpresskraft wird nicht nur hydraulisch oder elektrisch, sondern durch selbstverstärkende Servosynchronisationsdruckstücke, insbesondere durch laterale Reibkraftverstärkung der Servosynchronisationsdruckstücke, aufgebracht. Die Anpresskraft entspringt somit unterschiedlichen Quellen. Das Steuergerät übernimmt unterdessen - neben weiteren Aufgaben - die Tätigkeit, mit Hilfe der Sensorik den Schließgrad zumindest einer der Kupplungen des Doppelkupplungsgetriebes bestimmen zu können. Abweichend von bisher üblichen Getriebesteuerungen wird kein Druckanhebungsbefehl vorgehalten. Der Druckanhebungsbefehl würde für eine Anhebung des Drucks in der Hydraulik des Doppelkupplungsgetriebes sorgen. Der Druckanhebungsbefehl wird in klassischen Doppelkupplungsgetrieben zur Steuerung der Pumpe verwendet. Es geht kein Druckanhebungsbefehl an die Pumpe während der Synchronisation. Das Druckniveau wird in der Hydraulik während der gesamten Synchronisation in einem gleich bleibenden Druckband belassen. Ein gesonderter Befehl wird nicht zu der Pumpe gesendet. Weiterhin ist es vorteilhaft, wenn die Pumpe auch ohne Nachlaufzeit auskommt. Nach festgestelltem Schluss, wenn also die Sensorik den Eingriff der Kupplung identifiziert hat, muss die Pumpe zur Versorgung nicht mehr weiter betrieben werden. Die Erfindung zeichnet sich u. a. dadurch aus, dass permanent nur ein solches Druckniveau in der Hydraulik des Getriebes vorgehalten werden muss, das oberhalb eines für die Betätigung der Ventile notwendigen Drucks liegt, aber nicht zur Betätigung der Kupplungen angehoben werden muss.

Nachfolgend werden weitergehende, vorteilhafte Ausgestaltungen dargelegt.

In einer vorteilhaften Ausführung weist das Doppelkupplungsgetriebe mehr als fünf Gänge auf. Besonders bevorzugt ist eine Ausführung als doppelt aufgebautes Parallelgetriebe.

Ein Parallelgetriebe, auch als Parallel-Schaltgetriebe, kurz PSG, bezeichnet, ist bekanntlich ein aus zwei Teilgetrieben bestehendes Doppelkupplungsgetriebe mit einer Doppelkupplung. Ein Teilgetriebe weist die geraden, das andere Teilgetriebe die ungeraden Gänge auf. Während der Schaltung kann das Drehmoment kontinuierlich von einer Kupplung zur anderen hinüberfließen. Ein solches PSG zeichnet sich durch einen erhöhten Schaltkomfort aus.

Das erfindungsgemäße Doppelkupplungsgetriebe, insbesondere als doppelt aufgebautes Parallelgetriebe, weist jeweils wenigstens ein Druckstück auf. Vorzugsweise sind wenigstens jeweils drei Druckstücke vorhanden. Das wenigstens eine Druckstück dient einer Vollservosynchronisation in den niedrigen Gängen. Unter den niedrigen Gängen werden beispielsweise die Gänge 1 bis 4 verstanden. Wie viele Gänge die Ganggruppe "niedrigen Gänge" tatsächlich aufweist, hängt von der Ausbildung des Doppelkupplungsgetriebes ab, welches je nach Ausführungsform unterschiedliche Anzahlen an Gängen aufweisen kann. Die Anzahl an Gängen kann insbesondere bei Doppelkupplungsgetrieben in Arbeitsmaschinen 5 oder höher als 5, insbesondere wesentlich höher als 5, beispielsweise mehrere zehn, betragen. Nach einer Ausgestaltung werden den niedrigen Gängen die Vorwärtsgänge 1 bis 3 zugeordnet. In einer weiteren Ausgestaltung werden den niedrigen Gängen die Vorwärtsgänge 1 bis 5 zugeordnet.

Die Konussynchronisation in den Gängen mit Vollservosynchronisation ist somit vorzugsweise eine Einfach- oder Doppelkonussynchronisation. Von einer Vollservosynchronisation wird dann gesprochen, wenn die Energie aus der Muffensychnronisation bzw. der Schiebemuffe, insbesondere über eine Nut, auf das Druckstück übertragbar ist und aus dem daraus abgeleiteten entgegenwirkenden Drehmoment auch das Entsperren erleichtert wird. Je nach Ausgestaltung des I-förmigen Stabes, der einen wesentlichen Teil des Synchronisationsdruckstückes darstellt, handelt es sich um eine Servosynchronisation oder sogar um eine Vollservosynchronisation. Bei einer Vollservosynchronisation über das Druckstück gibt es mehrere Kraft- und Drehmomenteinleitungsstellen bzw. -bereiche in dem Synchronisationsdruckstück. Im einfachsten Fall muss das Synchronisationsdruckstück zwei Einleitungspunkte aufweisen. Eine reine Servosynchronisation, vorzugsweise mit einem I-förmigen Druckstück, nutzt im einfachsten Falle über eine, sich in eine Extremität erstreckende, Seitenwand ein Drehmoment. Die durch das wenigstens eine Druckstück ermöglichte Vollservosynchronisation prädestiniert das erfindungsgemäße Doppelkupplungsgetriebe vorteilhafterweise für eine elektromechanisch, eine elektrohydraulisch bzw. eine hydraulisch betätigte Innenschaltung, weil durch die selbstverstärkende Synchronisierung an kritischen Stellen im Getriebe nurmehr eine vergleichsweise reduzierte Betätigungsenergie bzw. Betätigungskraft erforderlich ist.

Die reduzierte Betätigungsenergie bzw. Betätigungskraft senkt die Anforderungen bei der Auslegung der Innenschaltung, wie beispielsweise das innere Gewicht bzw. auch den Strombedarf bei einer elektromechanischen Betätigung. Das Gewicht der Innenschaltung, also jener Teile des Doppelkupplungsgetriebes, die mittels Vollservosynchronisation die Leichtgängigkeit und Schaltschnelligkeit des Doppelkupplungsgetriebes fördern, wird auch als inneres Gewicht bezeichnet. Durch den Begriff "inneres Gewicht" wird unter Getriebefachleuten auch das Gewicht des Konus oder der Koni bezeichnet. Gedanklich wird unter dem inneren Gewicht der Teil der Synchronsierung bezeichnet, der wenigstens zeitweilig unterhalb der Schiebemuffe liegt.

In einer bevorzugten Ausführungsform ist die Vollservosynchronisation mittels Servosynchronisationsdruckstück ausschließlich in der Synchronisation der niedrigen Gänge vorhanden. In den mittleren und hohen Gängen ist diesfalls ein Konussynchronisationsdruckstück ohne laterale Verstärkungswirkung vorhanden. Die mittleren und hohen Gänge sind jene an die niedrigen Gänge anschließenden Gänge, wobei die unteren der mittleren Gänge teilweise überlappend mit den niedrigen Gängen und die unteren der höheren Gänge teilweise überlappend mit den höheren Gängen sein können. Die Übergänge zwischen den Ganggruppen sind fließend. Die Einteilung in niedrige, mittlere und höhere Gänge lässt sich aus diesem Grund nicht abschließend taxativ angeben, weil sie von der Gangzahl des Doppelkupplungsgetriebes, die von Ausführungsform zu Ausführungsform unterschiedlich sein kann, abhängt. Bei einem siebengängigen Doppelkupplungsgetriebe sind die niedrigen Gänge die Gänge von 1 bis 3 oder 4. Die mittleren Gänge sind die Gänge 4, 5 und 6. Die hohen Gänge sind die Gänge 6 und 7. Durch die gezielte Zuteilung von Vollservosynchronisationsfunktionalität zu den einzelnen Ganggruppen des Doppelkupplungsgetriebes gelingt vorteilhafterweise eine im Bezug auf die Schaltperformance, d. h. Leichtgängigkeit der Schaltung und Schaltgeschwindigkeit, besonders ausgewogene Auslegung des Doppelkupplungsgetriebes. Das Kraftniveau des gesamten Doppelkupplungsgetriebes lässt sich dadurch senken, dass die Gänge, die den größten Kraftaufwand erfordern, vorteilhaft durch Vollservosynchronisationen in ihren erforderlichen Synchronisationskräften gesenkt werden. Nach einer Untersuchung durch die Erfinder der vorliegenden Erfindung sind dies vorrangig die niedrigen Gänge. Nach einer weiteren Untersuchung durch die Erfinder der vorliegenden Erfindung sind dies die Zwischenwahlgänge bei schnellen Gangreduktionen.

Bei dem erfindungsgemäßen Doppelkupplungsgetriebe führt vorteilhafterweise eine Selbstverstärkungswirkung durch ein Abwinkeln des Servosynchronisationsdruckstücks aus seiner horizontalen Ruheposition zu wenigstens einer Verdopplung einer Reibwirkung eines Konuses oder von Koni der Konussynchronisation. Für die Mehrzahl des Begriffes Konus werden in dieser Schrift synonym die Bezeichnungen Koni, Konen bzw. Konusse verwendet. Durch die selbstverstärkende Synchronisierung gelingt vorteilhafterweise auch eine Gewichtsersparnis der Innenschaltung. Weiterhin bewirkt die Reduktion der Konusse bzw. Konen eine Senkung der Kosten bzw. Bauteilanzahl, sowie des Schleppmomentes.

Die Synchronisationen des Doppelkupplungsgetriebes sind in einer bevorzugten Ausführung in Gängen mit Servosynchronisationsdruckstücken aufgebaut, die während einer Doppelrückschaltung eine Zwischenwahl darstellen. Aus statistischen Untersuchungen des Fahrverhaltens von Fahrern, die ein Fahrzeug mit Doppelkupplung und den daraus sich ergebenden feinteiligen Gangaufteilungen fahren, ist zu entnehmen, dass bei Rückschaltungen, d. h. bei Schaltvorgängen in niedrigere Gänge, häufig eine Gangzahlzielreduktion um zwei oder drei Gänge durchgeführt wird. Beispielhaft soll das Fahrzeug aus einem vierten Gang in einen zweiten oder einen ersten Gang bei dem Anrollen auf ein Stauende geschaltet werden. Somit ist die Schaltphase 4-3-2 oder 4-3-2-1 von der Getriebesteuerung durchzuführen. Der Fahrer beabsichtigt eine schnelle Zielgangerreichung. Den Fahrer interessiert eigentlich nur die Erreichung des endgültigen Gangs. Mittels der erfindungsgemäßen Lösung ist es in einer Ausgestaltung möglich, eine schnellere Gangreduktion durchzuführen. Hierzu werden die Gänge, die nach statistischer Verteilung häufiger zügig durchgeschaltet werden, mit einer Doppelkupplungsvollservosynchronisation aufgebaut. Gangeinlegephasen von weniger als 3 Sekunden gelten im Sinne der vorliegenden Erfindung als Gangzwischenphasen. Die übrigen Gänge können mit klassischen Druckstücken realisiert werden. Die Gänge, die nur kurzzeitig eingelegt werden, sind die Zwischenwahlgänge. Die Zwischenwahl ist nur eine Überbrückungsstufe für ein sequentiell niederschaltendes Getriebe.

Eine weitere bevorzugte Ausführungsform ist gegeben, wenn das Doppelkupplungsgetriebe ein mit zwei Abtriebswellen ausgestattetes Getriebe ist. Beide Abtriebswellen sind abtriebsseitig durch ein Summiergetriebe verbunden. Das Summiergetriebe kann als Räderumlaufgetriebe aufgebaut sein. Somit ist das erfindungsgemäße Doppelkupplungsgetriebe vorteilhafterweise unter anderem in Kraftfahrzeugen einsetzbar, die ein Leistungsverzweigungsgetriebe aufweisen bzw. benötigen.

Das Druckstück bewegt sich aus seiner Ruheposition nur in dem eigentlichen Synchronisationsvorgang. In der Ruheposition liegt das Druckstück neutral in einer mittleren Stellung. Das Druckstück hat in der Ruheposition keine kraftverstärkende Wirkung. Das Druckstück wandert aus der Position in Richtung der Umlaufrichtung der Nabe der Synchronisation.

Statt dass unterschiedliche Synchronisationskoni in den unterschiedlichen Gängen des Getriebes eingebaut sind, hat das Doppelkupplungsgetriebe in unterschiedlichen Gängen Druckstücke unterschiedlichen Typs. Vorteilhaft ist es, wenn Servosynchronisationsdruckstücke in niedrigen Gängen und Druckstücke ohne selbstverstärkende Wirkung in den hohen Gängen verbaut sind. Das Doppelkupplungsgetriebe ist bis auf die Druckstücke in allen Gängen nahezu identisch, d. h. möglichst identisch, aufgebaut. Mit identischem Aufbau wird ein solcher Aufbau bezeichnet, bei dem natürlich die Zahnradgrößen und die Zahnradverhältnisse bei jedem einzelnen Gang angepasst sind, jedoch die für die Synchronisation zuständigen Bauteile gleich gehalten sind, außer - wie zuvor ausgeführt - die Druckstücke. Die verwendeten Druckstücke hängen von dem für sie bestimmten Gang ab.

Eine Verstärkung der Normsynchronkapazität, insbesondere einer axialen Anpresskraft zwischen Konussynchronisierung und Gangrad, erfolgt durch die selbstverstärkende Wirkung der Servosynchronisationsdruckstücke. Der Verstärkungsfaktor, der durch die Servosynchronisationsdruckstücke eingestellt wird, ist so gewählt, dass der Verstärkungsfaktor, vereinfacht als V bezeichnet, bei einem Wert von 1,5 oder höher liegt. Die Definition der Normsynchronkapazität lehnt sich an das Verständnis von Getriebeeniwicklem an. Die Normsynchronkapazität wird als Anpresskraft im Verhältnis zu einem Reibwert dargestellt. Der Wert der Normsynchronkapazität wird in Nm/N angegeben. Die Normsynchronkapazität einer Synchronisation entspricht der Anzahl der Reibflächen in einer einzelnen Synchronisation. Die Normsynchronkapazität entspricht dem mittleren Reibwert. Die Normsynchronkapazität entspricht dem mittleren Reibradius. Die Normsynchronkapazität ist umgekehrt proportional zu dem Sinus des jeweiligen Konuswinkels. Als Formel kann der Zusammenhang zwischen Normsynchronkapazität und den in die Kapazität eingehenden Abhängigkeiten wie folgt dargestellt werden:

$$C = n \frac{\mu R}{\sin \Theta}$$

(mit C ... Synchronkapazität, n ... Anzahl der Reibflächen, $\mu$ ... mittlerer Reibwert, R ... mittlerer Reibradius, $\Theta$... Konuswinkel, üblich zwischen 6° und 12° in einem erfindungsgemäßen Getriebe)

Die Servosynchronisationsdruckstücke verursachen einen Verstärkungsfaktor in einem Wertebereich von 1,5 bis ca. 3, vorzugsweise ist der Verstärkungsfaktor in einem Wertebereich zwischen 1,7 und 2,3 angesiedelt, wenn sie in einem erfindungsgemäßen Doppelkupplungsgetriebe verbaut sind.

Bei klassischen Doppelkupplungsgetrieben ist bisher eine extrem hohe Kraft in den niedrigen Gängen für das Schließen der vorgeschalteten Kupplung zu wählen gewesen. Die Erfindung hat weiterhin den Vorteil, dass sie zur Reduktion der Kraftspreizung beitragen kann. Werden die Gänge des Getriebes in Bezug auf die Anpresskraft in axialer Richtung aufeinander abgestimmt, so lässt sich die Kraftspreizung in einem engen Band halten. Ein erfindungsgemäßes Doppelkupplungsgetriebe hält die Kraftspreizung zwischen niedrigstem Gang und höchstem Gang niedrig. Die Kraftspreizung zwischen den Gängen beträgt weniger als 400 N für die axiale Anpresskraft. Dabei ist das Getriebe so eingestellt, dass das Mindestkraftniveau von ca. 200 N in dem Gang, der die geringste Anpresskraft erfordert, nicht unterschritten wird. Durch die vorteilhafte Einstellung der Kraft in dem Gang mit der niedrigsten axial benötigten Kraft kann ein enges Band für die übrigen Gänge aufgelegt werden. Die benötigte Kraft in dem niedrigsten Gang beträgt dann z. B. nicht mehr als 600 N.

Das Doppelkupplungsgetriebe nutzt die zusätzlich gewonnene Energie aus den Servosynchronisationsdruckstücken, um beschleunigt den Synchronisationsvorgang abschließen zu können. Dabei üben die Servosynchronisationsdruckstücke eine Trägheitsbeschleunigung aus. Die zu bewegenden Massen in der Synchronisation werden durch die Energie aus dem Bewegungsspiel der Servosynchronisationsdruckstücke zusätzlich beschleunigt. Besonders vorteilhaft wird die Trägheitsbeschleunigung bei einer Rückschaltung von einem höheren Gang in einen niedrigen Gang genutzt, bei der so genannten Gangrückschaltung. Die Energie wird beim Abbau einer Drehzahldifferenz zwischen den zu synchronisierenden Bauteilen, wie Muffe, Synchronisierung und Gangrad, eingesetzt. Durch diese Maßnahmen lässt sich die Synchronisation innerhalb von 150 ms abschließen.

Die Servosynchronisationsschrägen lassen sich theoretisch beliebig einstellen. Wichtig ist aber die richtige Schräge. Es hat sich gezeigt, dass das Servosynchronisationsdruckstück einen Öffnungswinkel $\alpha$ haben sollte, der oberhalb von 40° und unterhalb von 90° zu wählen ist. Weiterhin vorteilhaft ist es, wenn der Öffnungswinkel symmetrisch um eine Mittellängsachse des Servosynchronisationsdruckstücks angeordnet ist. Mit dem Öffnungswinkel wird der spitze Winkel bezeichnet, der sich bei zwei parallel, aber gegenläufig angeordneten Servoschrägen im Schnittbereich der Winkelverlängerungen bildet. Durch die Schrägen werden gedachte Geraden gezogen, die sich in einem Punkt, der idealer Weise auf der Mittellängsachse des Druckstücks liegt, schneiden. Der Winkel zwischen den beiden Geraden liegt in einem Winkelbereich von 40° bis 90°. Größere oder kleinere Winkel haben sich in Versuchsreihen in Bezug auf die zusätzliche Nutzung des Drehmoments als nachteilig erwiesen.

Aufgrund der erhöhten Drehmomenteneinleitung in die Konusflächen der Konussynchronisation sind bessere Reibbeläge als die zuvor üblichen Reibbeläge einzusetzen. Die Synchronisierung wird mit Hilfe von Reibbelägen durchgeführt, die einen Reibwiderstand von mehr als 12 N/mm$^2$ über eine Mindestdauer von 10$^4$ Schaltzyklen überdauern. In dem Doppelkupplungsgetriebe werden Koni, d. h. also wenigstens zwei Konus, mit Reibbelägen verbaut, die einen Reibwiderstand haben, der oberhalb von 12 N/mm$^2$ liegt.

Die Energie für die Betätigung der Kupplungen erfolgt vorzugsweise durch eine hydraulische oder eine elektrische Betätigung. Hydraulische Systeme haben den Vorteil, dass überschüssige Energie zwischengespeichert werden kann. Aufgrund der Kraftabsenkung kann eine vereinfachte Betriebsstrategie für die Pumpe der Getriebehydraulik, gewählt werden. Es wird eine nachlauffreie Pumpenbetätigung gewählt. Das bedeutet, die Betätigungszylinder der Kupplungen bzw. die Betätigungskolben der Kupplungen, von denen beide hydraulisch betätigt werden, werden durch eine Pumpe versorgt. Die Pumpe wird nur in den Phasen betrieben, in denen tatsächlich eine Kupplungsbetätigung durchgeführt wird. Die üblichen Nachlaufzeiten, nach Abschluss der Pumpenbetätigung, entfallen. Die Pumpe ist eine nachlauffreie Pumpe. Gleichzeitig findet keine Druckniveauanhebung statt. Die Pumpe hält auf einem Dauerdruckniveau den hydraulischen Kreis des Doppelkupplungsgetriebes auch während der Schaltvorgänge. Pumppulsationen entfallen. Es findet keine Druckniveauanhebung während der eigentlichen Synchronisierung statt, u. a. deswegen, weil keine zusätzliche bzw. exzessive Energie benötigt wird.

Ein weiterer Vorteil liegt in einer möglichen Vereinfachung der Synchronisationen des Doppelkupplungsgetriebes. Es kann die bisher übliche Spemerzahnung in der Synchronisation entfallen. Weiterhin kann auch die Verzahnung an den Außen-Synchronringen entfallen. Daher sind die Synchronisationen spenverzahnungsfrei. In einer alternativen oder zusätzlichen Gestaltung können die Außensynchronringe verzahnungsfrei gestaltet werden. Die Abschaffung einiger Verzahnungen führt zu einfacheren Bauteilen, gleichzeitig bzw. zusätzlich tritt der positive Effekt ein, dass das Innengewicht reduziert wird.

In einem erfindungsgemäßen Doppelkupplungsgetriebe kann eine ausreichende Schaltkraft aufgebracht werden, obwohl eine Druckabsenkung um wenigstens 40% im Vergleich zu einem gleichartigen Doppelkupplungsgetriebe ohne erfindungsgemäße Maßnahmen gegeben ist. Dadurch lässt sich in einer Ausgestaltung die Kolbenfläche der hydraulischen Aktorik um ca. 40% verringern. Das bedeutet, die aktiven elektromechanischen Komponenten verkleinern sich in groben Maßen ebenfalls um 40%.

Um das innere Gewicht der Synchronisation weiter zu senken, können auch an Stelle von drei Servosynchronisationsdruckstücken sechs Servosynchronisationsdruckstücke eingesetzt werden. Das bedeutet, es werden sechs kleinere Druckstücke verbaut, die vorteilhafter Weise jeweils nur für eine einzige Gangwahl zuständig sind, also kein doppelintegriertes Druckstück sind.

Der Synchronisation dienen schräge Flächen an allen beteiligten Bauteilen, insbesondere an den Druckstücken. Erst nach erreichtem Gleichlauf der zu synchronisierenden Teile soll eine formschlüssige Verbindung ermöglicht werden. Solange kein Gleichlauf erreicht ist, wird die formschlüssige Verbindung der Synchronisation gesperrt. Man spricht deshalb auch von Sperr-Synchronisation. Die Synchronisation arbeitet durch die Bremswirkung infolge einer Reibwirkung der Koni mit ihren Gegenflächen. Die Anzahl der mehrfach vorhandenen Koni pro Gang soll wunschgemäß gesenkt werden, um das innere Gewicht der Synchronisation zu reduzieren. Das Vollservosynchronisationsdruckstück verstärkt die Schaltwirkung so weit, dass die einzelnen Gänge des Doppelkupplungsgetriebes selbst bei einer geringeren Anzahl an Koni, zum Beispiel einem Einfachkonus, synchronisiert eingelegt werden können.

Durch die Verwendung von Servosynchronisationen lässt sich die Energie in den Getrieben verstärkend nutzen. Untersuchungen der Anmelderin haben gezeigt, dass vorrangig wegen der aufzuwendenden Kraft in den unteren Gängen ein entsprechend hohes Kraftniveau gehalten werden muss. Allein schon das Absenken des Kraftniveaus aufgrund von selbstverstärkenden Schaltvorgängen in den unteren Gängen eines Doppelkupplungsgetriebes steigert merklich den Wirkungsgrad. Soll das Doppelkupplungsgetriebe entsprechend schnell schalten können, wird eine Servosynchronisation nicht in den höheren Gängen, sondern nur in den niedrigen Gängen verbaut. Die Schaltzeiten lassen sich in einem Doppelkupplungsgetriebe mit verstärkender Reibhemmungsnutzung verkürzen. Das erfindungsgemäße Doppelkupplungsgetriebe schaltet in einer Ausgestaltung - nicht zuletzt auch auf Grund des niedrigeren Kraft- und Drehmomentniveaus - in deutlich kürzeren Zeiten. Durch die Anzahl einzusparender Reibkoni pro Synchronisation, insbesondere bei den niedrigen Gängen, kann das innere Gewicht der Synchronisation reduziert werden. Weiterhin lässt sich die Schaltgabel, die in die jeweilige Muffe der Muffensynchronisation eingreift, schwächer auslegen, was wiederum eine Gewichtsersparnis mit sich bringt. Gleichzeitig lässt sich durch die Maßnahme der Kraftniveauabsenkung die Lebenszeit des Getriebes, insbesondere seiner Synchronisationen, erhöhen.

Die Erfindung trägt dazu bei, dass die Betätigungselemente, wie zum Beispiel hydraulische Zylinder, kleiner und leichter werden. Die Betätigungselemente im Kraftfluss können ebenfalls kleiner werden. Es können kleinere Aktuatoren verwendet werden. Die Leckagen im Falle einer hydraulischen Ausführung werden durch das Absenken des Druckniveaus entweder reduziert, ggf. sogar vollständig eliminiert. Die Lebensdauer der Dichtung wird erhöht.

## Figurenbeschreibung

Weitere vorteilhafte Eigenschaften und Ausbildungen der Erfindung werden anhand der im Folgenden erläuterten Zeichnungen beschrieben. In diesen Zeichnungen zeigt

Fig. 1 eine schematische Draufsicht auf einen Kraftfahrzeugfahrzeugantriebsstrang mit einer Ausführungsform des erfindungsgemäßen Doppelkupplungsgetriebes,

Fig.2 eine Veranschaulichung der elektromechanischen, elektrohydraulischen bzw. hydraulisch betätigten Innenschaltung des erfindungsgemäßen Doppelkupplungsgetriebes,

Fig. 3 Funktionsverläufe der Drehzahl und der Betätigungskraft bei einer Gangvorwahl; die Betätigungskraft im Vergleich mit und ohne Servo-Synchronisierung,

Fig.4 die Innenschaltung aus Fig. 2 mit einem erfindungsgemäßen Druckstück als Servosynchronisationsdruckstück in Detailansicht,

Fig. 5 den Öffnungswinkel an einem Servosynchronisationsdruckstück und

Fig. 6 eine Getriebeanordnung mit Pumpe und Steuergerät.

Nachfolgend wird eine Ausführungsform der Erfindung anhand der Figuren näher beschrieben.

Fig. 1 zeigt eine schematische Draufsicht auf einen Kraftfahrzeugfahrzeugantriebsstrang 4. Der Kraftfahrzeugfahrzeugantriebsstrang 4 weist ein Doppelkupplungsgetriebe 1 auf. Das Doppelkupplungsgetriebe 1 weist zwei Kupplungen 2, 6 auf. Das Doppelkupplungsgetriebe 1 weist weiterhin zwei Teilgetriebe 3, 7 auf. Das Doppelkupplungsgetriebe 1 weist Stimradsätze 5 an verschiedenen Stellen auf. Das Doppelkupplungsgetriebe 1 ist mit einer Synchronisierung durch eine Muffensynchronisierung 68 mittels einer Muffe 80 (siehe Figur 2) ausgestattet. Die Muffe 80 ist ringartig ausgebildet. Das Doppelkupplungsgetriebe 1 wird von einer Verbrennungskraftmaschine 10 angetrieben, die durch ihre umlaufende Kurbelwelle symbolisiert wird, an der die beiden Kupplungen der Doppelkupplung angeschlossen sind.

Das Doppelkupplungsgetriebe 1 weist auch eine erste und eine zweite Vorgelegewelle 8, 9 auf. Auf der ersten und zweiten Vorgelegewelle 8, 9 sind Zahnräder 12 unterschiedlicher Durchmesser angeordnet.

Das Doppelkupplungsgetriebe 1 weist in der dargestellten Ausführungsform zwei Abtriebswellen 20, 21 auf. Es könnte auch nur eine Abtriebswelle sein. Es könnten auch mehr als zwei Abtriebswellen sein. Auf den Abtriebswellen 20, 21 sind Losräder 24 angeordnet. Die Losräder 24 sind den Zahnrädern 12 der beiden Vorgelegewellen 8, 9 zugeordnet.

Weiterhin ist das Doppelkupplungsgetriebe 1 mit einer gleichen Anzahl Gangrädem 32 mit Außenzahnrädern 36 ausgestattet. Je ein Gangrad 32 ist einem Losrad 24 zugeordnet.

Das Doppelkupplungsgetriebe 1 ist weiterhin mit mehreren Muffensynchronisierungen 68 mit innen liegenden Zähnen 69 ausgestattet (siehe Figur 2). Durch Konussynchronisierungen 52, welche aus Übersichtlichkeitsgründen nicht in Fig. 1, sondern in Fig. 2 angezogen sind, können die Muffensynchronisierungen 68 mit den innen liegenden Zähnen 69 eine Drehzahlanpassung während einer Gangeinlegephase vornehmen. Die Drehzahlanpassung erfolgt zwischen einem gewählten Zahnrad 16 der Vorgelegewelle 8, 9 und des zugehörigen Losrads 24 der Abtriebswelle 20, 21.

Wenigstens eine Muffensynchronisierung 68 erfährt dadurch eine Konussynchronisierungsverstärkung, dass eine in Umlaufrichtung 76 der ringartigen Muffe 80 der Synchronisierung 68 gesehene laterale Reibkraftverstärkung bei einem Einspuren von Flanken 94 der Zähne 95 der Gangräder 32 und der Muffen 80 stattfindet. Die Umlaufrichtung 76 ist der Übersichtlichkeit halber in Fig. 2 und nicht in Fig. 1 angedeutet.

Das Doppelkupplungsgetriebe 1 der dargestellten Ausführungsform ist als ein sieben Gänge 100 umfassendes doppelt aufgebautes Parallelgetriebe 104 ausgebildet. Die sieben Gänge 100 sind als sechs Vorwärtsgänge und ein Retourgang (in der Zeichnung nicht näher bezeichnet) ausgebildet.

Das Doppelkupplungsgetriebe 1 weist jeweils wenigstens ein Druckstück 108 auf (Fig. 4). In der Ausführungsform weist das Parallelgetriebe 104 jeweils drei Druckstücke 108 auf. Die Druckstücke 108 dienen zu einer Vollservosynchronisation in den niedrigen Gängen 101. Somit ist die Konussynchronisation in den Gängen 101 mit Vollservosynchronisation eine Einfach- oder Doppelkonussynchronisation.

Das Druckstück 108 ist als Servosynchronisationsdruckstück 124 ausgebildet (Fig. 4). Die Vollservosynchronisation mittels Servosynchronisationsdruckstück 124 ist ausschließlich in der Synchronisation der niedrigen Gänge 101 vorhanden. In mittleren und hohen Gängen 102, 103 ist ein Konussynchronisationsdruckstück ohne laterale Verstärkungswirkung vorhanden.

Eine Selbstverstärkungswirkung durch ein Abwinkeln des Servosynchronisationsdrudcstücks 124 aus seiner horizontalen Ruheposition führt zu wenigstens einer Verdopplung einer Reibwirkung eines Konuses oder von Koni der Konussynchronisation.

Fig. 2 zeigt in einer Teilansicht eine Veranschaulichung der Innenschaltung des erfindungsgemäßen Doppelkupplungsgetriebes 1 aus Fig. 1. Die Innenschaltung kann elektromechanisch, elektrohydraulisch, hydraulisch oder auch pneumatisch betätigt sein. Auch weitere bekannte Arten der Betätigung der Innenschaltung sind denkbar und möglich, wie beispielsweise eine magnetische Betätigung. Es ist eine Muffensynchronisierung 68 mit der Innenvertahnung 69 mit der ihr zugeordneten ringartigen Muffe 80 an der Abtriebswelle 21 mit einem Teil der Losräder 24 und Gangräder 32 dargestellt. Der Vollständigkeit halber ist auch ein Teil der zweiten Vorgelegewelle 7 mit einer ihrer Zahnräder 12 und mit dem gewählten Zahnrad 16 zu sehen. Der Ort, an dem die Muffensynchronisierung 68 mittels Konussynchronisierung 52 stattfindet, ist angedeutet.

Die Synchronisationen des Doppelkupplungsgetriebes 1 sind in Gängen 101 mit Servosynchronisationsdruckstücken 124 aufgebaut. Die Gänge 101 mit Servosynchronisationsdruckstücken 124 stellen während einer Doppelrückschaltung eine Zwischenwahl dar.

Das Doppelkupplungsgetriebe 1 ist in der Ausführungsform mit zwei Abtriebswellen 20, 21 ausgestattet. Beide Abtriebswellen 20, 21 sind abtriebsseitig durch ein Summiergetriebe 176 verbunden. Das Summiergetriebe 176 kann als spezielle Ausbildung eines Stimradsatzes angesehen werden. Das Summiergetriebe 176 ist in der Ausführungsform als Räderumlaufgetriebe 180 ausgebildet.

Links wird eine Schiebemuffe zwischen (symbolisch) dargestellten zwei Gängen gezeigt, rechts dann nur das Druckstück, das ein kleines Teil unterhalb der Schiebemuffe ist.

Fig. 3 zeigt in zwei Diagrammen die Performanceverbesserungen im Hinblick auf die Betätigungskraft bzw. in der Folge der Betätigungsenergie. Gleichartig kann auch Schaltgeschwindigkeit verbessert werden, welche mit dem erfindungsgemäßen Doppelkupplungsgetriebe 1 erzielbar ist. Das obere Diagramm zeigt über der Zeit aufgetragen eine Gangwechselkurve 181 des Doppelkupplungsgetriebes 1. Die Gangwechselkurve 181 zeigt einen Runterschaltvorgang. Das untere Diagramm zeigt zwei Betätigungskraftverläufe 182, 183. Der Betätigungskraftverlauf 182 entstammt einem bekannten Doppelkupplungsgetriebe ohne Vollservosynchronisation. Der Betätigungskraftverlauf 183 entstammt einem erfindungsgemäßen Doppelkupplungsgetriebe 1. Wie ersichtlich wird auch durch die Erfindung die erforderliche Betätigungskraft, und in der Folge auch die Betätigungsenergie, die notwendig ist, verringert. Gleichartig kann die Schaltgeschwindigkeit vergleichsweise erhöht werden.

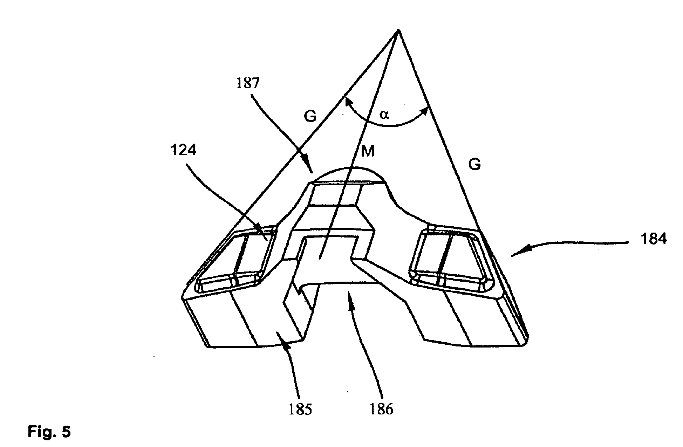

Wie der Fig. 5 zu entnehmen ist, kann der Öffnungswinkel α der durch die Servoschrägen gelegten Geraden G in einer gedachten Mittellängsachse M platziert werden, die - auf Grund der Form des Servosynchronisationsdruckstücks 124 - außerhalb des Servosynchronisationsdruckstücks 124 liegt. Das Servosynchronisationsdruckstück 124 hat verschiedene Servoschrägen 184 an ihrem Grundkörper 185, dessen Beweglichkeit durch Freistellungen 186 gefördert wird. Der Öffnungswinkel α liegt in der Verlängerung der Mitte 187.

Wie in der Fig. 6 zu sehen ist, wirkt der Getriebeaufbau eines Doppelkupplungsgetriebes 1 ähnlich zu üblichen Doppelkupplungsgetrieben, jedoch wird die Pumpe 40 von dem Steuergerät 41 über kürzere Intervalle und auf einem niedrigeren Druckniveau betrieben. Die Sensorik 42 erfasst den Schließgrad der Kupplung 6. Eine weitere Sensorik 43 erfasst den Schließgrad einer weiteren Kupplung 6. Sobald anhand der Sensorik 42 der Kupplungsschluss festgestellt ist, stellt das Steuergerät 41 den Betrieb der Pumpe 40 ein und nimmt nur dann die Pumpenansteuerung der Pumpe 40 auf, wenn das Druckniveau unter den zulässigen Dauerbetriebsdruck fallen sollte. Durch die Pumpe 40 kann ein Linearzylinder 44, wie zum Beispiel ein Wegeventil, betätigt werden, das in die Muffe 80 eingreift und die Muffe 80 entsprechend bewegen kann. Wenn über die Sensorik 42 festgestellt wird, dass die Kupplung 6 ausreichend geschlossen ist und das Steuergerät 41 einen anderen Gang einlegen will, wird unter Nutzung des hydraulischen Drucks aus der Pumpe 40 die Muffe 80 zur Einlegung eines Ganges verschoben. Sobald die Bewegung abgeschlossen ist, kann über die Kupplung 6 wieder der reguläre Kraftfluss aus der Verbrennungskraftmaschine 10 durch das Teilgetriebe 3 durchgeleitet werden.

**Bezugszeichenliste**

| | |
|---|---|
| 1 | Doppelkupplungsgetriebe |
| 2 | Kupplung |
| 3 | Teilgetriebe |
| 4 | Kraftfahrzeugfahrzeugantriebsstrang |
| 5 | Stirnradsatz |
| 6 | Kupplung |
| 7 | Teilgetriebe |
| 8 | erste Vorgelegewelle |
| 9 | zweite Vorgelegewelle |
| 10 | Verbrennungskraftmaschine |
| 12 | Zahnrad der Vorgelegewelle |
| 16 | gewähltes Zahnrad der Vorgelegewelle |
| 20 | Abtriebswelle |
| 21 | Abtriebswelle |
| 24 | Losrad |
| 32 | Gangrad |
| 36 | Außenzahnrad |
| 40 | Pumpe |
| 41 | Steuergerät |
| 42 | Sensorik |
| 43 | Sensorik |
| 44 | Hydraulischer Lineargeber |
| 52 | Konussynchronisierung |
| 68 | Muffensynchronisierung |
| 69 | innen liegende Zähne |
| 76 | Umlaufrichtung |
| 80 | ringartige Muffe |
| | |
| 94 | Flanke |
| 95 | Zahn |
| 100 | Gänge |
| 101 | niedrige Gänge |
| 102 | mittlere Gänge |
| 103 | hohe Gänge |
| 104 | Parallelgetriebe |
| 108 | Druckstück |
| 124 | Servosynchronisationsdruckstück |
| 176 | Summiergetriebe |
| 180 | Räderumlaufgetriebe |
| 181 | Gangwechselkurve |
| 182 | Betätigungskraftverlauf |
| 183 | Betätigungskraftverlauf |
| 184 | Servoschräge |
| 185 | Grundkörper |
| 186 | Freistellung |
| 187 | Mittlerer Bereich des Druckstücks |
| | |
| F | Anpresskraft, insbesondere axial in Abtriebsrichtung des Teilgetriebes |
| G | Gerade, insbesondere auf der Oberfläche der Servoschräge |
| M | Mittellängsachse, insbesondere des Druckstücks |
| V | Verstärkungsfaktor |
| α | Öffnungswinkel |

**Patentansprüche**

1. Doppelkupplungsgetriebe (1) mit wenigstens zwei Kupplungen (2, 6),
   mit wenigstens zwei Teilgetrieben (3, 7),
   mit wenigstens einem Stirnradsatz (5, 176, 180) mit Synchronisierung durch eine Muffensynchronisierung (68) mittels einer Muffe (80),

mit einem Steuergerät (41)

und mit wenigstens einer Pumpe (40) einer Getriebehydraulik als Teil des hydraulischen Systems, wobei das Steuergerät (41) den Betrieb des hydraulischen Systems einstellt,

**dadurch gekennzeichnet, dass**

das Steuergerät (41) eine Sensorik (42) zur axialen Wegbeobachtung innerhalb des Doppelkupplungsgetriebes (1) aufweist, und

eine Muffensynchronisierung (68) eine Konussynchronisierung (52) dadurch erfährt, dass eine in Umlaufrichtung (76) der ringartigen Muffe (80) der Synchronisierung (68) gesehene laterale Reibkraftverstärkung bei einer Synchronisationsverbringung einer Reibfläche eines Konus zu einer Synchronisationsbremsanlage erfolgt und ein Einspuren von Flanken (94) der Zähne (95) von Gangrädem (32) und der Muffe (80) stattfindet, wobei die Pumpe (40) das Druckniveau in der Getriebehydraulik während der gesamten Synchronisation ohne Nachlaufzeit in einem gleich bleibenden Druckband hält.

2. Doppelkupplungsgetriebe (1), insbesondere in einem Kraftfahrzeugfahrzeugantriebsstrang (4), zum Beispiel nach Anspruch 1, mit einer ersten und einer zweiten Vorgelegewelle (8, 9), auf denen Zahnräder (12) unterschiedlicher Durchmesser angeordnet sind,

und mit wenigstens einer Abtriebswelle (20, 21), auf der Losräder (24) angeordnet sind, die den Zahnrädern (12) der beiden Vorgelegewellen (8, 9) zugeordnet sind,

und einer gleichen Anzahl Gangrädem (32) mit Außenzahnrädern (36), wobei je ein Gangrad (32) einem Losrad (24) zugeordnet ist,

und mit mehreren Muffensynchronisierungen (68) mit innen liegenden Zähnen (69), die durch Konussynchronisierungen (52) eine Drehzahlanpassung während einer Gangeinlegephase zwischen einem gewählten Zahnrad (16) der Vorgelegewelle (8, 9) und des zugehörigen Losrads (24) der Abtriebswelle (20, 21) vornehmen können,

mit einem Steuergerät (41),

und mit wenigstens einer Pumpe (40) einer Getriebehydraulik als Teil des hydraulischen Systems, wobei das Steuergerät (41) den Betrieb des hydraulischen Systems einstellt,

**dadurch gekennzeichnet, dass**

das Steuergerät (41) eine Sensorik (42) zur axialen Wegbeobachtung innerhalb des Doppelkupplungsgetriebes (1) aufweist, und

wenigstens eine Muffensynchronisierung (68) eine Konussynchronisierungsverstärkung dadurch erfährt, dass eine in Umlaufrichtung (76) der ringartigen Muffe (80) der Synchronisierung (68) gesehene laterale Reibkraftverstärkung bei einer Synchronisationsverbringung einer Reibfläche eines Konus zu einer Synchronisationsbremsanlage erfolgt und ein Einspuren von Flanken (94) der Zähne (95) der Gangräder (32) und der Muffen (80) stattfindet, wobei die Pumpe (40) das Druckniveau in der Getriebehydraulik während der gesamten Synchronisation ohne Nachlaufzeit in einem gleich bleibenden Druckband hält.

3. Doppelkupplungsgetriebe (1) nach Anspruch 1 oder 2,

**dadurch gekennzeichnet, dass**

das Doppelkupplungsgetriebe (1) ein mehr als fünf Gänge (100) umfassendes, doppelt aufgebautes Parallelgetriebe (104) ist, das jeweils wenigstens ein Druckstück (108), vorzugsweise wenigstens jeweils drei Druckstükke (108), zu einer Vollservosynchronisation in den niedrigen Gängen (101) aufweist, und so vorzugsweise die Konussynchronisation in den Gängen (101) mit Vollservosynchronisation eine Einfach- oder Doppelkonussynchronisation ist.

4. Doppelkupplungsgetriebe (1) nach einem der vorhergehenden Ansprüche,

**dadurch gekennzeichnet, dass**

die Vollservosynchronisation mittels Servosynchronisationsdruckstück (124) ausschließlich in der Synchronisation der niedrigen Gänge (101) vorhanden ist, während in mittleren und hohen Gängen (102, 103) ein Konussynchronisationsdruckstück (132) ohne laterale Verstärkungswirkung vorhanden ist.

5. Doppelkupplungsgetriebe (1) nach einem der vorhergehenden Ansprüche,

**dadurch gekennzeichnet, dass**

eine Selbstverstärkungswirkung durch ein Abwinkeln des Servosynchronisationsdruckstücks (124) aus seiner horizontalen Ruheposition zu wenigstens einer Verdopplung einer Reibwirkung eines Konuses oder von Koni der Konussynchronisation führt.

6. Doppelkupplungsgetriebe (1) nach einem der vorhergehenden Ansprüche,

**dadurch gekennzeichnet, dass**

die Synchronisationen des Doppelkupplungsgetriebes (1) in Gängen (101) mit Servosynchronisationsdruckstücken (124) aufgebaut sind, die während einer Doppelrückschaltung eine Zwischenwahl darstellen.

7. Doppelkupplungsgetriebe (1) nach einem der vorhergehenden Ansprüche,

**dadurch gekennzeichnet, dass**

das Doppelkupplungsgetriebe (1) ein mit zwei Abtriebswellen (20, 21) ausgestattetes Getriebe ist, wobei beide Abtriebswellen (20, 21) abtriebsseitig durch ein Summiergetriebe (176), insbesondere als Räderumlaufgetriebe (180), verbunden sind.

8. Doppelkupplungsgetriebe (1) nach einem der vorhergehenden Ansprüche,
**dadurch gekennzeichnet, dass**
das Doppelkupplungsgetriebe (1) in unterschiedlichen Gängen (100, 101, 102, 103) Druckstücke (108, 124) unterschiedlichen Typs aufweist, insbesondere Servosynchronisationsdruckstücke (124) in niedrigen Gängen (101) und Druckstücke (108) ohne selbstverstärkende Wirkung in den hohen Gängen (103).

9. Doppelkupplungsgetriebe (1) nach einem der vorhergehenden Ansprüche,
**dadurch gekennzeichnet, dass**
eine Verstärkung der Normsynchronkapazität, insbesondere einer axialen Anpresskraft (F) zwischen Konussynchronisierung (52) und Gangrad (32), durch die selbstverstärkende Wirkung der Servosynchronisationsdruckstücke (124) erfolgt, die vorzugsweise bei einem Verstärkungsfaktor (V) von 1,5 oder höher liegt.

10. Doppelkupplungsgetriebe (1), insbesondere als Teil eines Personenkraftfahrzeugantriebstrangs, nach einem der vorhergehenden Ansprüche,
**dadurch gekennzeichnet, dass**
eine Kraftspreizung zwischen niedrigstem Gang (101) und höchstem Gang (103) von weniger als 400 N der axialen Anpresskraft (F) gegeben ist, wobei vorzugsweise ein Mindestkraftniveau von 200 N in dem Gang mit der geringsten Anpresskraft (F) nicht unterschritten wird.

11. Doppelkupplungsgetriebe (1) nach einem der vorhergehenden Ansprüche,
**dadurch gekennzeichnet, dass**
durch die Servosynchronisationsdruckstücke (124) eine Trägheitsbeschleunigung der Synchronisation ausgeübt wird, die bei einer Rückschaltung von einem höheren Gang (102) in einen niedrigen Gang (101) den Abbau einer Drehzahldifferenz zwischen den zu synchronisierenden Bauteilen wie Muffe (80), Synchronisierung (68) und Gangrad (32) innerhalb von 150 ms abschließt,
wobei das Servosynchronisationsdruckstück (124) einen Öffnungswinkel ($\alpha$), vorzugsweise symmetrisch um eine Mittellängsachse (M) des Servosynchronisationsdruckstücks (124) angeordnet, hat, der in einem Winkelbereich von 40° bis 90° liegt.

12. Doppelkupplungsgetriebe (1) nach einem der vorhergehenden Ansprüche,
**dadurch gekennzeichnet, dass**
die Synchronisierung (68) an Reibbelägen ausgeführt wird, die einen Reibwiderstand von mehr als 12 N/mm$^2$ über eine Mindestdauer von 10$^4$ Schaltzyklen überdauern.

13. Doppelkupplungsgetriebe (1) nach einem der vorhergehenden Ansprüche,
**dadurch gekennzeichnet, dass**
die beiden Kupplungen (2, 6) hydraulisch betätigt durch eine nachlauffreie Pumpe (40) versorgt auf einem Dauerdruckniveau ohne Druckniveauanhebung während der Synchronisierung (68) des Doppelkupplungsgetriebes (1) betrieben werden.

14. Verfahren zum Betrieb eines Doppelkupplungsgetriebes (1), insbesondere nach einem der vorhergehenden Ansprüche, mit einem Steuergerät (41), mit Sensorik (42) zur Wegbeobachtung, insbesondere der axialen Wegbeobachtung, und mit einer Pumpe (40) einer Getriebehydraulik, dessen Betrieb das Steuergerät (41) einstellt,
**dadurch gekennzeichnet, dass**
während der Synchronisation (68) eine zusätzlich aufzubringende axiale Anpresskraft (F) durch selbstverstärkende Servosynchronisationsdruckstücke (124), insbesondere durch laterale Reibkraftverstärkung der Servosynchronisationsdruckstücke (124), aufgebracht wird, unterdessen das Steuergerät (41) mit Hilfe der Sensorik (42) einen Schließgrad einer der Kupplungen (2, 6) des Doppelkupplungsgetriebes (1) beobachtet, ohne einen Druckanhebungsbefehl an die Pumpe (40) während der Synchronisation (68) zu senden, wobei vorzugsweise die Pumpe (40) ohne Nachlaufzeit nach festgestelltem Schluss einer der Kupplungen (2, 6) betrieben wird.

## Claims

1. Dual-clutch transmission (1) with at least two clutches (2, 6),
with at least two partial gears (3, 7),
with at least one spur wheel set (5, 176, 180) with synchronization through a sleeve synchronization (68) by means of a sleeve (80),
with a control unit (41)
and with at least one pump (40) of transmission hydraulics as part of the hydraulic system, whereby the control unit (41) adjusts the operation of the hydraulic system,
**characterized by** that
the control unit (41) has a sensor system (42) for an axial path observation within the dual-clutch transmission (1), and
a sleeve synchronization (68) experiences a cone synchronization (52), in that a lateral friction force reinforcement, this being seen in a direction of rotation (76) of the ring-type sleeve (80) of the synchronization (68), is carried out during a synchronization placement of a friction surface of a cone to a synchronization braking butting and a meshing of flanks (94) of the teeth (95) of gear wheels (32) and of the sleeve (80) takes place, whereat the pump (40) maintains the pressure level in the transmission hydraulics throughout the entire synchronization without overrun time in a constant pressure band.

2. Dual-clutch transmission (1), in particular in a motor vehicle drive train (4), for example according to claim 1, with a first and a second intermediate shaft (8, 9), on which gearwheels (12) with different diameters are placed,
and with at least one driven shaft (20, 21), on which loose gears (24) are placed, which are assigned to the gear wheels (12) of both intermediate shafts (8, 9),
and with the same number of gear wheels (32) with outer toothed wheels (36), whereat a gear wheel (32) each is assigned to one loose gear (24),
and with several sleeve synchronizations (68) with internally arranged teeth (69), which can carry out an adaptation of the number of revolutions during a gear shifting phase between a selected gear wheel (16) of the intermediate shaft (8, 9) and the assigned loose gear (24) of the driven shaft (20, 21) through cone synchronizations (52),
with a control unit (41),
and with at least one pump (40) of transmission hydraulics as part of the hydraulic system, whereby the control unit (41) adjusts the operation of the hydraulic system,
**characterized by** that
the control unit (41) has a sensor system (42) for an axial path observation within the dual-clutch transmission (1), and
at least one sleeve synchronization (68) experiences a cone synchronization reinforcement, in that a lateral friction force reinforcement, this being seen in a direction of rotation (76) of the ring-type sleeve (80) of the synchronization (68), is carried out during a synchronization placement of a friction surface of a cone to a synchronization braking butting and a meshing of flanks (94) of the teeth (95) of the gear wheels (32) and of the sleeves (80) takes place, whereat the pump (40) maintains the pressure level in the transmission hydraulics throughout the entire synchronization without overrun time in a constant pressure band.

3. Dual-clutch transmission (1) according to claim 1 or 2,
**characterized by** that
the dual-clutch transmission (1) is a double structure parallel transmission (104) which has more than five gears (100), which has respectively at least one pressure piece (108), preferably at least respectively three pressure pieces (108), for a full servosynchronization in the lower gears (101) and so preferably the cone synchronization in the gears (101) with full servosynchronization is a single cone or a double-cone synchronization.

4. Dual-clutch transmission (1) according to any one of the preceding claims,
**characterized by** that
the full servosynchronization by means of a servosynchronization pressure piece (124) exists exclusively in the synchronization of the lower gears (101), while a cone synchronization pressure piece (132) exists in the central and higher gears (102, 103) without any lateral reinforcement effect.

5. Dual-clutch transmission (1) according to any one of the preceding claims,
**characterized by** that
a self reinforcing effect by a hinging of the servosynchronization pressure piece (124) from its horizontal resting position results to at least a doubling of a friction effect of a cone or of cones of the cone synchronization.

6. Dual-clutch transmission (1) according to any one of the preceding claims,
**characterized by** that
the synchronizations of the dual-clutch transmission (1) are structured in gears (101) with servosynchronization pressure pieces (124), which constitute an intermediate choice during a double downshifting.

7. Dual-clutch transmission (1) according to any one of the preceding claims,
**characterized by** that
the dual-clutch transmission (1) is a transmission provided with two driven shafts (20, 21), whereby both driven shafts (20, 21) are connected on a driven side by a summation gear (176), in particular in a form of a wheel planetary gear (180).

8. Dual-clutch transmission (1) according to any one of the preceding claims,
**characterized by** that
the dual-clutch transmission (1) has in different gears (100, 101, 102, 103) different types of pressure pieces (108, 124), in particular servosynchronization pressure pieces (124) in lower gears (101) and pressure pieces (108) without self-reinforcing effect in the higher gears (103).

9. Dual-clutch transmission (1) according to any one of the preceding claims,
**characterized by** that
a reinforcement of the standard synchronization capacity, in particular of an axial pressure force (F) between the cone synchronization (52) and the gear wheel (32), is carried out by the self-reinforcing effect of the servosynchronization pressure pieces (124), which is preferably around a reinforcement factor (V) of 1.5 or more.

10. Dual-clutch transmission (1), in particular as part of a passenger motor vehicle drive train, according to any one of the preceding claims, **characterized by** that there is a force ratio spread between a lowest gear (101) and a highest gear (103) of less than 400 N of the axial pressure force (F), whereat preferably a minimum force level may not be lower than 200 N in the gear with the lowest pressure force (F).

11. Dual-clutch transmission (1) according to any one of the preceding claims, **characterized by** that an inertial acceleration of the synchronization is exerted by the servosynchronization pressure pieces (124), this acceleration terminating during a downshifting from a higher gear (102) to a lower gear (101) the reduction of a rotational speed difference between the components to be synchronized such as the sleeve (80), the synchronization (68) and the gear wheel (32) within 150 ms, whereat the servosynchronization pressure piece (124) has an opening angle ($\alpha$), arranged preferably symmetrically about a central longitudinal axis (M) of the servosynchronization pressure piece (124), which is situated in an angular range of 40° to 90°.

12. Dual-clutch transmission (1) according to any one of the preceding claims, **characterized by** that the synchronization (68) is performed on friction linings, which outlast a frictional resistance of more than 12 N/mm$^2$ over a minimal duration of 10$^4$ switching cycles.

13. Dual-clutch transmission (1) according to any one of the preceding claims, **characterized by** that both clutches (2, 6) are operated by being hydraulically actuated by a pump without overrun function (40) supplied on a steady pressure level without pressure level increase during the synchronization (68) of the dual-clutch transmission (1).

14. Method for operating a dual-clutch transmission (1), in particular according to any one of the preceding claims, with a control unit (41), with a sensor system (42) for a path observation, in particular for an axial path observation, and with a pump (40) of transmission hydraulics, the operation of which is adjusted by the control unit (41), **characterized by** that an additionally applied axial pressure force (F) is applied during the synchronization (68) by self-reinforcing servosynchronization pressure pieces (124), in particular by lateral friction force reinforcement of the servosynchronization pressure pieces (124), while the control unit (41) with the help of the sensor system (42) observes a degree of closure of one of the clutches (2, 6) of the dual-clutch transmission (1), without emitting a pressure increase command to the pump (40) during the synchronization (68), whereat preferably the pump (40) is operated without overrun after the registered closure of one of the clutches (2, 6).

**Revendications**

1. Boîte de vitesses à double embrayage (1) avec au moins deux embrayages (2, 6), avec au moins deux boîtes partielles (3, 7), avec au moins un jeu de pignons droits (5, 176, 180) avec synchronisation par une synchronisation à manchon (68) au moyen d'un manchon (80), avec un appareil de commande (41) et avec au moins une pompe (40) d'un assemblage hydraulique de boîte de vitesses comme partie du système hydraulique, l'appareil de commande (41) ajustant l'opération du système hydraulique, **caractérisée par le fait que** l'appareil de commande (41) présente un système de capteurs (42) pour l'observation du trajet axial à l'intérieur de la boîte de vitesses à double embrayage (1), et une synchronisation à manchon (68) subit une synchronisation de cône (52) **par le fait qu'**un renforcement de la force de friction latérale, ceci étant vu dans un sens de rotation (76) du manchon de type bague (80) de la synchronisation (68), est effectué lors d'une mise en place de synchronisation d'une surface de friction d'un cône en appui de freinage à synchronisation et qu'un engrenage des flancs (94) des dents (95) des pignons (32) et du manchon (80) a lieu, la pompe (40) maintenant le niveau de pression dans l'assemblage hydraulique de boîte de vitesses dans une bande de pression constante pendant toute la synchronisation sans temps de poursuite.

2. Boîte de vitesses à double embrayage (1), en particulier dans une chaîne cinématique de transmission d'un véhicule automobile (4), par exemple selon la revendication 1, avec un premier arbre intermédiaire et un second arbre intermédiaire (8, 9), sur lesquels sont placées des roues dentées (12) de différents diamètres, et avec au moins un arbre d'entraînement de sortie (20, 21), sur lequel sont placés des pignons fous (24), qui sont conjugués aux roues dentées (12) des deux arbres intermédiaires (8, 9), et avec un même nombre de pignons (32) avec des roues dentées extérieures (36), chaque pignon (32) étant conjugué à un pignon fou (24), et avec plusieurs synchronisations à manchon (68) avec des dents situées à l'intérieur (69), qui peuvent effectuer, grâce aux synchronisations de cône (52), une adaptation du nombre de tours pendant une phase de passage de vitesse entre une roue dentée sélectionnée (16) de l'arbre intermédiaire (8, 9) et du pignon fou correspondant (24) de l'arbre d'entraînement de sortie (20, 21),
avec un appareil de commande (41),
et avec au moins une pompe (40) d'un assemblage hydraulique de boîte de vitesses comme partie du système hydraulique, l'appareil de commande (41) réglant l'opération du système hydraulique,
**caractérisée par le fait que**
l'appareil de commande (41) présente un système de capteurs (42) pour l'observation du trajet axial à l'intérieur de la boîte de vitesses à double embrayage (1), et
au moins une synchronisation à manchon (68) subit un renforcement de synchronisation de cône **par le fait, qu'**un renforcement de la force de friction latérale, ceci étant vu dans un sens de rotation (76) du manchon de type bague (80) de la synchronisation (68), est effectué lors d'une mise en place de synchronisation d'une surface de friction d'un cône en appui de freinage à synchronisation et qu'un engrenage des faces (94) des dents (95) des pignons (32) et des manchons (80) a lieu, la pompe (40) maintenant le niveau de pression dans l'assemblage hydraulique de boîte de vitesses dans une bande de pression constante pendant toute la synchronisation sans temps de poursuite.

3. Boîte de vitesses à double embrayage (1) selon la revendication 1 ou 2,
**caractérisée par le fait que**
la boîte de vitesses à double embrayage (1) est une boîte à engrenages parallèles à structure double (104) qui comprend plus de cinq vitesses (100), qui présente respectivement au moins une pièce de pression (108), de préférence au moins respectivement trois pièces de pression (108), pour une synchronisation entièrement servoassistée dans les petites vitesses (101), et que donc de préférence la synchronisation de cône dans les vitesses (101) avec synchronisation entièrement servoassistée est une synchronisation de cône simple ou double.

4. Boîte de vitesses à double embrayage (1) selon l'une des revendications précédentes,
**caractérisée par le fait que**
la synchronisation entièrement servoassistée existe au moyen d'une pièce de pression de synchronisation servoassistée (124) uniquement dans la synchronisation des petites vitesses (101), pendant qu'il existe une pièce de pression de synchronisation de cône (132) sans effet de renforcement latéral dans les vitesses moyennes et élevées (102, 103).

5. Boîte de vitesses à double embrayage (1) selon l'une des revendications précédentes,

**caractérisée par le fait que**
un effet auto renforçateur par un basculement de la pièce de pression de synchronisation servoassistée (124) à partir de sa position horizontale de repos entraîne au moins un doublement d'un effet de friction d'un cône ou de cônes de la synchronisation de cône.

6. Boîte de vitesses à double embrayage (1) selon l'une des revendications précédentes,
**caractérisée par le fait que**
les synchronisations de la boîte de vitesses à double embrayage (1) sont structurées en vitesses (101) avec des pièces de pression de synchronisation servoassistées (124), qui constituent un choix intermédiaire pendant une double rétrogradation de vitesses.

7. Boîte de vitesses à double embrayage (1) selon l'une des revendications précédentes,
**caractérisée par le fait que**
la boîte de vitesses à double embrayage (1) est une boîte de vitesses équipée de deux arbres d'entraînement de sortie (20, 21), les deux arbres de sortie (20, 21) étant reliés du côté de la sortie par un engrenage totalisateur (176), en particulier comme engrenage planétaire à roues (180).

8. Boîte de vitesses à double embrayage (1) selon l'une des revendications précédentes,
**caractérisée par le fait que**
la boîte de vitesses à double embrayage (1) présente, dans différentes vitesses (100, 101, 102, 103), des pièces de pression (108, 124) de différents types, en particulier des pièces de pression de synchronisation servoassistées (124) dans de petites vitesses (101) et des pièces de pression (108) sans effet auto renforçateur dans les vitesses élevées (103).

9. Boîte de vitesses à double embrayage (1) selon l'une des revendications précédentes,
**caractérisée par le fait que**
un renforcement de la capacité synchrone standard, en particulier d'une force de pression axiale (F) entre la synchronisation de cône (52) et le pignon (32), est effectué par l'effet auto renforçateur des pièces de pression de synchronisation servoassistées (124), qui se situe de préférence à un facteur de renforcement (V) de 1,5 ou plus.

10. Boîte de vitesses à double embrayage (1), en particulier comme partie d'une chaîne cinématique de transmission d'un véhicule automobile, selon l'une des revendications précédentes,
**caractérisée par le fait que**
il y a une extension de force entre une plus petite vitesse (101) et une vitesse la plus élevée (103) de moins de 400 N de la force de pression axiale (F), cependant que de préférence un niveau de force ne doit pas être inférieur à un minimum de 200 N dans la vitesse avec la force de pression la plus faible (F).

11. Boîte de vitesses à double embrayage (1) selon l'une des revendications précédentes,
**caractérisée par le fait que**
une accélération d'inertie de la synchronisation est exercée par les pièces de pression de synchronisation servoassistées (124) qui termine, lors d'une rétrogradation d'une vitesse plus élevée (102) à une faible vitesse (101), la diminution d'une différence de nombre de tours entre les composants à synchroniser comme le manchon (80), la synchronisation (68) et le pignon (32) en 150 ms, cependant que la pièce de pression de synchronisation servoassistée (124) a un angle d'ouverture ($\alpha$), de préférence placé symétriquement autour d'un axe longitudinal médian (M) de la pièce de pression de synchronisation servoassistée (124), qui se situe dans une plage d'anges de 40° à 90°.

12. Boîte de vitesses à double embrayage (1) selon l'une des revendications précédentes,
**caractérisée par le fait que**
la synchronisation (68) est réalisée sur des garnitures de friction qui résistent à un coefficient de friction de plus de 12 N/mm$^2$ pendant une durée minimale de 10$^4$ cycles de commutation.

13. Boîte de vitesses à double embrayage (1) selon l'une des revendications précédentes,
**caractérisée par le fait que**
les deux embrayages (2, 6) fonctionnent en étant actionnés hydrauliquement par une pompe sans temps de poursuite (40), alimentés à un niveau de pression permanente sans augmentation du niveau de pression pendant la synchronisation (68) de la boîte de vitesses à double embrayage (1).

14. Procédé pour le fonctionnement d'une boîte de vitesses à double embrayage (1), en particulier selon l'une des revendications précédentes, avec un appareil de commande (41), avec un système de capteurs (42) pour l'observation du trajet, en particulier pour l'observation du trajet axial, et avec une pompe (40) d'un assemblage hydraulique de boîte de vitesses, dont le fonctionnement règle l'appareil de commande (41),
**caractérisé par le fait que**,
pendant la synchronisation (68), une force de pression axiale qui doit être appliquée en supplément (F) est appliquée par des pièces de pression de synchronisation servoassistées auto renforçatrices (124), en particulier par un renforcement de la force de friction latérale des pièces de pression de synchronisation servoassistées (124), pendant que l'appareil de commande (41) observe à l'aide du système de capteurs (42) un degré de fermeture de l'un des embrayages (2, 6) de la boîte de vitesses à double embrayage (1), sans émettre un ordre d'augmentation de la pression à la pompe (40) pendant la synchronisation (68), cependant que de préférence la pompe (40) sans temps de poursuite fonctionne après la fermeture constatée d'un des embrayages (2, 6).

**Fig. 1**

**Fig. 2**

Fig. 3

Fig. 4

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10148424 A1
- DE 4104167 A1
- DE 102006020905 B3
- DE 102005056827 A1
- DE 20216782 U1
- DE 19580558 C1
- DE 4041159 A1
- DE 10312867 B3
- DE 102006050752 A1
- WO 2005080831 A1
- DE 602005000224 T2
- DE 19702541 C1
- DE 10350937 A1
- DE 1208966 A
- DE 102006044352 B3
- US 5390560 A
- DE 102007022544 B4
- EP 1826431 A2
- EP 1750025 A2
- US RE37697 E1
- US 2002069716 A1
- US 2002060113 A1